# EUROPÄISCHE PATENTSCHRIFT

(11) **EP 0 718 097 B1**
(45) Veröffentlichungstag und Bekanntmachung des Hinweises auf die Patenterteilung: **06.11.2002**
(21) Anmeldenummer: 95119993.4
(22) Anmeldetag: 18.12.1995
(51) Int. Cl.: B32B 5/28, B29C 70/08, B60R 13/02

(54) **Verfahren zur Herstellung eines flächigen Auskleidungsteiles für Kraftfahrzeuge und danach hergestelltes Auskleidungsteil**
Process for manufacturing a flat lining for automotive vehicle and lining obtained thereby
Procédé de fabrication d'un revêtement intérieur plat pour véhicule automobile et revêtement obtenu par ce procédé

(30) Priorität: 22.12.1994 DE 4445718; 21.06.1995 DE 19522480
(43) Veröffentlichungstag der Anmeldung: 26.06.1996
(73) Patentinhaber: Lear Corporation, Southfield, MI 48086-5009 (US)
(72) Erfinder: Schönberger, Peter, D-92655 Grafenwöhr (DE); Murr, Karl, D-92724 Trabitz (DE)
(74) Vertreter: Goddar, Heinz J., Dr.

(56) Entgegenhaltungen:
- WO-A-85/04620
- FR-A- 2 430 848
- GB-A- 2 185 438
- US-A- 4 288 491

## Beschreibung

Die Erfindung betrifft ein Verfahren zur Herstellung eines flächigen Auskleidungsteiles für Kraftfahrzeuge, wie Kfz-Himmel, Hutablagen oder dergleichen, mit Sandwichaufbau, bei dem eine Kernschicht zwischen diese abdeckende Außenschichten angeordnet ist. Die Erfindung betrifft weiterhin ein nach diesem Verfahren hergestelltes Auskleidungsteil.

Die Herstellung von glasfaserfreien Auskleidungsteilen für Kraftfahrzeuge ist in jüngster Zeit immer wichtiger geworden, auch vom Gesichtspunkt der Recycelbarkeit her.

Beispielsweise beschreibt die DE-U 94 09 438 ein Auskleidungsteil für Kraftfahrzeughimmel mit einem sandwichartigen Aufbau, bei dem auf eine Kernschicht aus Polyurethan Pflanzenfaserschichten mittels eines nicht näher definierten Klebmittels aufgebracht sind.

GB 2185438 A offenbart ein Auskleidungsmaterial, das aus mindestens drei Schichten besteht, nämlich einem Kern aus Schaum oder in Wabenstruktur sowie zwei aufgelegten Dünnschichten auf jeder Seite des Kernes, die mit Harz imprägniert sind. Die Dünnschichten können aus Papier, beispielsweise glasfaserhaltigem Papier mit einer Tonfüllung bestehen und mit Phenolharz getränkt sein. Das Kernmaterial kann Glasfasermaterial sein, das mit Phenolharz getränkt ist. Das offenbarte Verfahren zur Herstellung sieht vor, daß das Kernmaterial bis zu 100°C erwärmt werden kann, um Lösungsmittel des Tränkharzes abdampfen zu lassen, bis eine klebrige Oberfläche entsteht. Das Auskleidungsmaterial wird durch Aushärten unter Hitze und Druck, beispielsweise in einer Presse, aus den übereinandergelegten Schichten aus Kernmaterial und beidseitig aufgebrachten Dünnschichten hergestellt.

WO 85/04620 offenbart ein thermisch verformbares Verbundmaterial, das aus einer Kernschicht und beidseitig aufgelegten Faserschichten besteht, wobei die Verbindung zwischen den einzelnen Schichten durch zusätzliche Klebstoffschichten erzeugt wird. Das Kernmaterial kann aus einem Schaumkern bestehen, die beidseitig aufgelegten Klebeschichten sind mit einem thermoplastischen oder thermisch härtbaren Harz imprägniert. Die Verbindung zwischen dem Schaumkern und den harzgetränkten aufgelegten Gewebematten wird durch wärmeaktivierbaren Klebstoff beim Pressen erzeugt. Dieser Aufbau eignet sich insbesondere zur Herstellung thermisch formbarer Verbundmaterialien, wenn der Schaumkern in der Wärme verformbar, d. h. thermoplastisch ist und das Harz, mit dem die beidseitig aufgelegten Gewebematten getränkt sind, entweder thermoplastisch oder thermisch härtbar, d.h. duroplastisch ist. Das Herstellungsverfahren sieht zwar vor, aus den harzgetränkten Matten das Lösungsmittel durch Trocknen zu entfernen, die Verbindung zum Schaumkern wird jedoch durch eine zusätzliche Klebstoffschicht erzeugt.

FR 2430848 offenbart ein Material aus zwei Gewebeschichten, die übereinandergelegt und mit einem Harz getränkt sind. Die Gewebematten, die aus Jute, Baumwolle oder Kokos bestehen, bieten den Vorteil, wegen eines großen Porenvolumens ein leichtes Endprodukt herstellen zu lassen.

US 4,288,491 offenbart ein schwer brennbares Kunststofflaminat mit geringer Dicke und hoher Festigkeit sowie Wasserbeständigkeit. Das Verbundmaterial wird durch Pressen harzimprägnierten Papiers in mindestens zwei Schichten unter erhöhter Temperatur hergestellt, wobei das Harz Phenol-Formaldehyd-Harz und Amino-Formaldehyd-Harz sein kann. Überdies ist das Papier, das die inneren Schichten bilden soll, mit Flammschutzmitteln aus Phosphorpentoxid, Ammonium und einem Metalloxid imprägniert.

Die nicht vorveröffentlichte P 43 21 222.5 beschreibt einen glasfreien Kraftfahrzeughimmel mit Außenschichten, die ebenfalls aus Naturfasern bestehen, wobei Klebeschichten aus Epoxyharz vorgesehen sind, welche beim Aufschäumen in einer Heißdruckpresse die Außenschichten durchtränken und somit für eine innige Verbindung zu der Kernschicht sorgen. Diese Vorgehensweise nach einem Naßverfahren hat sich für viele Anwendungen bewährt. Die innige Verbindung von Außenschichten und Kernschichten erfordert immer auch das Einbringen eines Klebemittels in die Formpresse, was man aus Gründen der Verfahrensökonomie zu vermeiden wünscht.

Es ist daher die Aufgabe der Erfindung, das Verfahren der eingangs genannten Art so auszugestalten, daß ein zusätzliches Einbringen eines Klebemittels in das für das Verfahren benutzte Heißpresswerkzeug nicht erforderlich ist.

Diese Aufgabe wird von einem Verfahren nach Patentanspruch 1 gelöst.

Erfindungsgemäß ist vorgesehen, daß ein Schichtmaterial mit hoher Kapillarwirkung mit einem duroplastischen Harz getränkt wird, das getränkte Schichtmaterial zumindest kurzzeitig getrocknet wird, wobei das duroplastische Harz hinsichtlich seiner Klebeigenschaften im wesentlichen inaktiviert wird, auf die Kernschicht beidseitig das zumindest angetrocknete getränkte Schichtmaterial als jeweilige Außenschicht aufgelegt wird, auf zumindest eine Außenschicht eine Deckschicht aufgebracht wird und die Außenschichten bei einer Temperatur, die oberhalb der Reaktivierungstemperatur des duroplastischen

Harzes liegt, mit der Kernschicht und mit der/den Deckschicht(en), gegebenenfalls mit gleichzeitigem Umformen des Sandwichaufbaus, verpreßt werden. Gemäß der vorliegenden Erfindung wird somit nach einem Trockenverfahren gearbeitet, was auch die Möglichkeit bietet, die getränkten und getrockneten Materialien für die Außenschicht vorzubereiten und über einen längeren Zeitraum von beispielsweise einem Monat zu lagern.

Grundsätzlich sollten beide Außenseiten des Sandwichaufbaus mit einer Deckschicht, beispielsweise einem Deckvlies, abgeschlossen sein, wenn es wichtig ist sicherzustellen, daß das fertige Auskleidungsteil an der Oberfläche, insbesondere an der Sichtseite, optisch einwandfrei ist. Ferner dient üblicherweise die Deckschicht auch als Trennmittel zur Heißpressform.

Es hat sich gezeigt, daß als Schichtmaterial für die Außenschichten Papier, Viskosevlies oder Baumwollvlies geeignet ist. Als duroplastisches Harz können zum Beispiel Melaminharz oder Phenolharz vorgesehen sein.

Dabei wird das duroplastische Harz mit einem Flächengewicht von 70 *bis* 160 g/m² in das Schichtmaterial eingetragen.

Das erfindungsgemäße Verfahren bietet auch die Möglichkeit, vor dem Verpressen auf zumindest eine der Außenschichten und/oder Deckschichten einen Dekorstoff oder eine Dekorfolie aufzulegen, der/die dann in demselben einstufigen Verfahren verpreßt wird. Dabei wird der Dekorstoff bevorzugt auf eine Deckschicht gelegt, welche dann gleichzeitig die Funktion einer unterlegten Sperrfolie übernimmt, um das Durchdringen des Duroplastharzes durch den Stoff zu verhindern, wobei das duroplastische Harz auch für die Verbindung zwischen der Außenschicht und dem Dekorstoff bzw. den anderen gewählten Dekormaterialien sorgt. Hingegen kann eine Dekorfolie selbst als Deckschicht ausgebildet sein.

Bevorzugt wird das Verpressen bei einer Temperatur in dem Bereich von 140°C bis 170°C durchgeführt.

Erfindungsgemäß wird auf die Außenschichten eine Armierung, bestehend aus Naturfasergewebe, bevorzugt Jutefasergewebe aufgelegt, die besonders belastete Teile zusätzlich verstärkt. Das Flächengewicht kann 100 bis 400 g/m² betragen.

Im folgenden soll die Erfindung lediglich beispielhaft anhand der beigefügten Zeichnung erläutert werden. Es zeigt
- Figur 1: eine schematisierte Schnittansicht eines Auskleidungsteiles nach einer ersten Ausführungsform der Erfindung; und
- Figur 2: eine schematisierte Schnittansicht eines Auskleidungsteiles nach einer zweiten Ausführungsform der Erfindung.

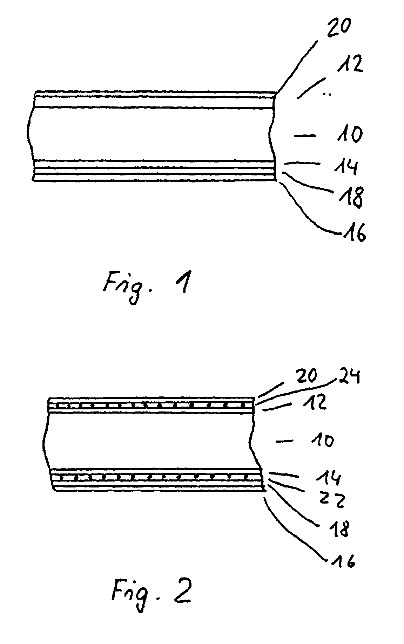

Der in der Figur 1 dargestellte Sandwichaufbau besteht aus einer Kernschicht 10, beispielsweise aus Polyurethanschaum, zwei Außenschichten 12 und 14, die die Kernschicht beidseitig abdecken, Deckschichten 18 und 20, die auf den Außenschichten 14, 12 liegen, sowie einer Dekorschicht 16, beispielsweise einem Dekorstoff, die auf eine 18 der Deckschichten aufgelegt ist. Die Dekorschicht 16 wird sich dabei an der Sichtseite des Auskleidungsteiles befinden. Die Außenschichten 12, 14 enthalten das duroplastische Harz, das beim Verpressen bei hoher Temperatur hinsichtlich seiner Klebeigenschaften reaktiviert wird und für den innigen Verbund zu der Kernschicht 10 sorgt, wobei die Außenschicht 14 auch durch die Deckschicht 18 hindurch die Verbindung zu der Dekorschicht 16 herstellt. Die Deckschicht 18 verhindert dabei das völlige Durchtränken des Dekorstoffes.

Als Material für die Aüßenschichten 12, 14 kann Papier, Viskosevlies oder Baumwollvlies vorgesehen sein, bevorzugt mit einem Flächengewicht von 20 bis 40 g/m², wobei berücksichtigt werden muß, daß das Schichtmaterial für das verwendete duroplastische Harz eine ausreichend hohe kapillare Wirkung hat, daß es also eine ausreichende Menge dieses Harzes aufnehmen kann.

Es ist auch möglich, die der Sichtseite zugewandte Deckschicht 18 als Dekorschicht mit einem Muster zu bedrucken oder farblich zu gestalten. In diesem Fall würde ein Dekorstoff nicht verwendet.

Als duroplastisches Harz sind Melaminharz, Phenolharz oder andere Harze vorgesehen, die über einen kürzeren oder längeren Zeitraum abtrocknen, so daß die Außenflächen des damit getränkten Schichtmaterials zunächst nicht mehr klebrig sind. Die Klebestellen werden erst dann wieder reaktiviert, wenn das duroplastische Harz einer ausreichend hohen Temperatur ausgesetzt wird, die für die genannten Harze in dem Bereich von 140°C bis 160°C liegt.

Der in der Figur 2 dargestellte Sandwichaufbau entspricht dem der Figur 1, jedoch ist erfindungsgemäß auf die Außenschichten 12, 14 zusätzlich eine Armierung 22, 24 aufgebracht, die aus Naturfasergewebe, bevorzugt Jutefasergewebe besteht. Die Tränkung des beispielsweise als Außenschichten 12, 14 vorgesehenen Vliespapiers bewirkt dann beim Heißpressen, daß die Armierung mit den übrigen Schichten einen Verbund bildet.

Die Verwendung duroplastischer Harze hat dabei den zusätzlichen Vorteil, daß eine Formstabilität des Auskleidungsteiles selbst bei hohen Umgebungstemperaturen erwartet werden kann.

## Patentansprüche

1. Verfahren zur Herstellung eines flächigen Auskleidungsteiles für Kraftfahrzeuge, mit Sandwichaufbau, bei dem
- für die Außenschichten ein Schichtmaterial mit hoher Kapillarwirkung mit einem duroplastischen Harz getränkt wird;
- das getränkte Schichtmaterial zumindest kurzzeitig getrocknet wird, wobei das duroplastische Harz hinsichtlich seiner Klebeigenschaften im wesentlichen inaktiviert wird;
- auf jede so hergestellte Außenschicht eine Armierung, bestehend aus einem Naturfasergewebe, aufgelegt wird;
- eine Kernschicht zwischen zwei diese Kernschicht abdeckenden Außenschichten angeordnet wird;
- auf zumindest eine Seite des so hergestellten Sandwichaufbaus eine Deckschicht aufgebracht wird; und
- die Kernschicht, die Außenschichten, die Armierung und die Deckschicht(en) bei einer Temperatur, die oberhalb der Reaktivierungstemperatur des duroplastischen Harzes liegt, miteinander, gegebenenfalls mit gleichzeitigem Umformen des Sandwichaufbaus, verpreßt werden.

2. Verfahren nach Anspruch 1, **dadurch gekennzeichnet, daß** als Schichtmaterial Papier, Viskosevlies oder Baumwollvlies vorgesehen ist.

3. Verfahren nach Anspruch 1 oder 2, **dadurch gekennzeichnet, daß** als duroplastisches Harz Melaminharz oder Phenolharz eingesetzt wird.

4. Verfahren nach einem der Ansprüche 1 bis 3, **dadurch gekennzeichnet, daß** das duroplastische Harz mit einem Flächengewicht von 70 bis 160 g/m² in das Schichtmaterial eingetragen wird.

5. Verfahren nach einem der Ansprüche 1 bis 4, **dadurch gekennzeichnet, daß** vor dem Verpressen auf zumindest eine Außenseite ein Dekorstoff oder eine Dekorfolie aufgelegt wird.

6. Verfahren nach einem der Ansprüche 1 bis 5, **dadurch gekennzeichnet, daß** das Verpressen bei einer Temperatur in dem Bereich von 140°C bis 170°C durchgeführt wird.

7. Verfahren nach einem der Ansprüche 1 bis 6, **dadurch gekennzeichnet, daß** ein Naturfasergewebe mit einem Flächengewicht von 100 bis 400 g/m² verwendet wird.

8. Verfahren nach einem der Ansprüche 1 bis 7, **dadurch gekennzeichnet, daß** für die Armierung ein Jutefasergewebe verwendet wird.

9. Verfahren nach einem der Ansprüche 1 bis 8, **dadurch gekennzeichnet, daß** die Armierung im wesentlichen über die gesamte Fläche des Auskleidungsteils gelegt wird.

10. Flächiges Auskleidungsteil für Kraftfahrzeuge, mit Sandwichaufbau, bei dem eine Kernschicht zwischen diese abdeckenden Außenschichten angeordnet ist, **dadurch gekennzeichnet, daß** die Außenschichten (12, 14) mittels eines in dem Vlies aufgenommenen Duroplastharzes auf die Kernschicht (10) geklebt sind, wobei auf zumindest eine Außenschicht ebenfals mittels des Duroplastharzes eine Deckschicht (18, 20) aufgeklebt ist, und daß auf den Außenschichten und/oder zwischen Außenschicht(en) und Deckschicht(en) eine Armierung aus Naturfasergewebe angeordnet ist.

11. Auskleidungsteil nach Anspruch 10, **dadurch gekennzeichnet, daß** die Kemschicht (10) aus Polyurethanschaum besteht.

12. Auskleidungsteil nach Anspruch 10 oder 11, **dadurch gekennzeichnet, daß** als Schichtmaterial für die Außenschichten (12, 14) Papier, Viskosevlies oder Baumwollvlies vorgesehen ist.

13. Auskleidungsteil nach einem der Ansprüche 10 bis 12, **dadurch gekennzeichnet, daß** das Vliesmaterial ein Flächengewicht von 20 bis 40 g/m² hat.

14. Auskleidungsteil nach einem der Ansprüche 10 bis 13, **dadurch gekennzeichnet, daß** als duroplastisches Harz Melaminharz oder Phenolharz vorgesehen ist.

15. Auskleidungsteil nach einem der Ansprüche 10 bis 14, **dadurch gekennzeichnet, daß** das duroplastische Harz mit einem Flächengewicht von 70 bis 160 g/m² in das Schichtmaterial eingetragen ist.

16. Auskleidungsteil nach einem der Ansprüche 10 bis 15, **gekennzeichnet durch** eine der Sichtseite zugewandte Dekorschicht (16).

17. Auskleidungsteil nach einem der Ansprüche 10 bis 16, **dadurch gekennzeichnet, daß** das als Armierung vorhandene Naturfasergewebe ein Jutefasergewebe ist.

18. Auskleidungsteil nach einem der Ansprüche 10 bis 17, **dadurch gekennzeichnet, daß** das als Armierung vorhandene Naturfasergewebe ein Flächengewicht von etwa 100 bis 400 g/m² hat.

19. Auskleidungsteil nach einem der Ansprüche 10 bis 18, **dadurch gekennzeichnet, daß** die Armierung sich im wesentlichen über die gesamte Fläche des Auskleidungsteils erstreckt.

## Claims

1. A method of making a flat lining part for motor vehicles, of the sandwich type of construction, wherein:
- for the outer layers a layer material having a high capillary action is impregnated with a thermosetting resin;
- the impregnated layer material is dried at least for a short time, the thermosetting resin being substantially inactivated in respect of its adhesive properties;
- a reinforcement consisting of a natural fibre fabric is placed on each outer layer thus produced;
- a core layer is disposed between two outer layers covering said core layer;
- a top layer is applied to at least one side of the sandwich structure thus made; and
- the core layer, the outer layers, the reinforcement and the top layer or layers are pressed together, with simultaneous forming of the sandwich structure if required, at a temperature above the reactivation temperature of the thermosetting resin.

2. A method according to claim 1, **characterised in that** the layer material used is paper, viscose non-woven or cotton non-woven.

3. A method according to claim 1 or 2, **characterised in that** the thermosetting resin used is melamine resin or phenolic resin.

4. A method according to any one of claims 1 to 3, **characterised in that** the thermosetting resin is introduced into the layer material with a weight per unit area of 70 to 160 g/m².

5. A method according to any one of claims 1 to 4, **characterised in that** a decorative substance or a decorative sheet is applied to at least one outside before the pressing operation.

6. A method according to any one of claims 1 to 5, **characterised in that** the pressing operation is carried out at a temperature in the range from 140°C to 170°C.

7. A method according to any one of claims 1 to 6, **characterised in that** a natural fibre fabric is used with a weight per unit area of 100 to 400 g/m².

8. A method according to any one of claims 1 to 7, **characterised in that** a jute fibre fabric is used for the reinforcement.

9. A method according to any one of claims 1 to 8, **characterised in that** the reinforcement is placed over substantially the entire surface of the lining part.

10. A flat lining part for motor vehicles, of the sandwich type of construction, wherein a core layer is disposed between outer layers covering the same, **characterised in that** the outer layers (12, 14) are stuck to the core layer (10) by means of a thermosetting resin absorbed in the non-woven, a top layer (18, 20) being stuck, again by means of the thermosetting resin, on at least one outer layer, and **in that** a reinforcement of natural fibre fabric is disposed on the outer layers and/or between the outer layer(s) and top layer(s).

11. A lining part according to claim 10, **characterised in that** the core layer (10) consists of polyurethane foam.

12. A lining part according to claim 10 or 11, **characterised in that** the layer material provided for the outer layers (12, 14) is paper, viscose non-woven or cotton non-woven.

13. A lining part according to any one of claims 10 to 12, **characterised in that** the non-woven material has a weight per unit area of 20 to 40 g/m².

14. A lining part according to any one of claims 10 to 13, **characterised in that** the thermosetting resin used is melamine resin or phenolic resin.

15. A lining part according to any one of claims 10 to 14, **characterised in that** the thermosetting resin is introduced into the layer material in a weight per unit area of 70 to 160 g/m².

16. A lining part according to any one of claims 10 to 15, **characterised by** a decorative layer (16) facing the visible side.

17. A lining part according to any one of claims 10 to 16, **characterised in that** the natural fibre fabric used as reinforcement is a jute fibre fabric.

18. A lining part according to any one of claims 10 to 17, **characterised in that** the natural fibre fabric used as reinforcement has a weight per unit area of about 100 to 400 g/m².

19. A lining part according to any one of claims 10 to 18, **characterised in that** the reinforcement extends over substantially the entire surface of the lining part.

## Revendications

1. Procédé pour la fabrication d'une pièce de garniture plate pour véhicules automobiles, à structure en sandwich, dans lequel
- pour les couches extérieures, un matériau stratifié à forte action capillarité est imprégné de résine thermodurcissable ;
- le matériau stratifié imprégné est au moins brièvement séché, la résine thermodurcissable étant alors pour l'essentiel désactivée en ce qui concerne ses propriétés adhésives ;
- une armature constituée de tissu en fibres naturelles est appliquée sur chacune des couches extérieures ainsi confectionnées ;
- une couche centrale est disposée entre deux couches extérieures recouvrant cette couche centrale ;
- une couche de recouvrement est appliquée sur au moins un côté de la structure en sandwich ainsi confectionnée ; et
- la couche centrale, les couches extérieures, l'armature et la (les) couche(s) de recouvrement sont comprimées entre elles, le cas échéant avec une déformation simultanée de la structure en sandwich, à une température qui est supérieure à la température de réactivation de la résine thermodurcissable.

2. Dispositif selon la revendication 1, **caractérisé en ce que** le matériau stratifié prévu est du papier, du voile de viscose ou du voile de coton.

3. Procédé selon la revendication 1 ou 2, **caractérisé en ce que** la résine thermodurcissable mise en oeuvre est de la résine de mélamine ou de la résine phénolique.

4. Procédé selon l'une des revendications 1 à 3, **caractérisé en ce que** la résine thermodurcissable est incorporée au matériau stratifié à raison d'un poids surfacique de 70 à 160 g/m².

5. Procédé selon l'une des revendications 1 à 4, **caractérisé en ce que**, avant la compression, une matière décorative ou une feuille décorative est appliquée sur au moins un côté extérieur.

6. Procédé selon l'une des revendications 1 à 5, **caractérisé en ce que** la compression est réalisée à une température située dans la plage de 140 °C à 170 °C.

7. Procédé selon l'une des revendications 1 à 6, **caractérisé en ce que** le tissu en fibres naturelles employé possède un poids surfacique de 100 à 400 g/m².

8. Procédé selon l'une des revendications 1 à 7, **caractérisé en ce qu'**un tissu en fibres de jute est employé pour l'armature.

9. Procédé selon l'une des revendications 1 à 8, **caractérisé en ce que** l'armature est appliquée sensiblement sur toute la surface de la pièce de garniture.

10. Pièce de garniture plate pour véhicules automobiles, à structure en sandwich, dans laquelle une couche centrale est disposée entre lesdites couches extérieures couvrantes, **caractérisée en ce que** les couches extérieures (12, 14) sont collées sur la couche centrale (10) au moyen d'une résine thermodurcissable incorporée au voile, une couche de recouvrement (18, 20) étant collée, également au moyen de la résine thermodurcissable, sur au moins une couche extérieure, et **en ce qu'**une armature en tissu en fibres naturelles est disposée sur les couches extérieures et/ou entre la (les) couche(s) extérieure(s) et la (les) couche(s) de recouvrement.

11. Pièce de garniture selon la revendication 10, **caractérisée en ce que** la couche centrale (10) est constituée de mousse de polyuréthane.

12. Pièce de garniture selon la revendication 10 ou 11, **caractérisée en ce que** le matériau stratifié prévu pour les couches extérieures (12, 14) est du papier, du voile de viscose ou du voile de coton.

13. Pièce de garniture selon l'une des revendications 10 à 12, **caractérisée en ce que** le matériau en voile possède un poids surfacique de 20 à 40 g/m².

14. Pièce de garniture selon l'une des revendications 10 à 13, **caractérisée en ce que** la résine thermodurcissable prévue est de la résine de mélamine ou de la résine phénolique.

15. Pièce de garniture selon l'une des revendications 10 à 14, **caractérisée en ce que** la résine thermodurcissable est incorporée au matériau stratifié à raison d'un poids surfacique de 70 à 160 g/m².

16. Pièce de garniture selon l'une des revendications 10 à 15, **caractérisée par** une couche décorative (16) tournée vers le côté apparent.

17. Pièce de garniture selon l'une des revendications 10 à 16, **caractérisée en ce que** le tissu en fibres naturelles présent en tant qu'armature est un tissu en fibres de jute.

18. Pièce de garniture selon l'une des revendications 10 à 17, **caractérisée en ce que** le tissu en fibres naturelles présent en tant qu'armature possède un poids surfacique d'environ 100 à 400 g/m².

19. Pièce de garniture selon l'une des revendications 10 à 18, **caractérisée en ce que** l'armature s'étend sensiblement sur toute la surface de la pièce de garniture.
